# EUROPÄISCHE PATENTSCHRIFT

(11) **EP 2 464 498 B1**
(45) Veröffentlichungstag und Bekanntmachung des Hinweises auf die Patenterteilung: **24.12.2014**
(21) Anmeldenummer: 10745168.4
(22) Anmeldetag: 12.08.2010
(51) Int. Cl.: B29B 9/06

(54) **MESSERKOPFHALTERUNG EINES UNTERWASSERGRANULATORS**
CUTTER HEAD HOLDER OF AN UNDERWATER GRANULATOR
FIXATION DE TÊTE DE LAME D'UN GRANULATEUR SOUS EAU

(30) Priorität: 13.08.2009 DE 102009037398
(43) Veröffentlichungstag der Anmeldung: 20.06.2012
(73) Patentinhaber: Automatik Plastics Machinery GmbH, 63762 Grossostheim (DE)
(72) Erfinder: DAHLHEIMER, Stefan, 63801 Kleinostheim (DE)
(74) Vertreter: Spranger, Stephan
(86) Internationale Anmeldenummer: PCT/EP2010/004952
(87) Internationale Veröffentlichungsnummer: WO 2011/018230

(56) Entgegenhaltungen:
- WO-A2-2007/147162
- WO-A2-2010/021814
- GB-A- 2 132 549
- US-A- 5 059 103

## Beschreibung

Die Erfindung betrifft eine Messerkopfhalterung für Messer eines Unterwassergranulators zum Granulieren von Granulatkömern aus einer Schmelze, welche aus einer Lochplatte in eine Prozesskammer im Gehäuse des Unterwassergranulators austritt, aufweisend eine Messerwelle, welche an eine Motorwelle eines Motors des Unterwassergranulators ankoppelbar ist, gemäß dem Oberbegriff des Anspruchs 1.

Generell werden solche Unterwassergranulatoren beispielsweise zur Granulierung von thermoplastischem Kunststoffmaterial, wie z. B. Polyethylen oder Polypropylen, eingesetzt, wobei das geschmolzene Kunststoffmaterial durch Düsenöffnungen der Lochplatte in die Prozesskammer, gefüllt mit einem Kühlmedium, beispielsweise Wasser, mittels eines Extruders gepresst wird und von einer Messeranordnung mit einer Messerkopfhalterung und einem an einem Messerhalter angebrachten Messer oder mehreren Messern, welche(s) die Düsenöffnungen überstreicht/überstreichen, so abgetrennt wird, dass Granulatkörner gebildet werden. Entsprechende Vorrichtungen werden beispielsweise unter der Produktbezeichnung SPHERO vom Unternehmen Automatik Plastics Machinery GmbH angeboten und vertrieben.

Bei bekannten Messerkopfhalterungen gemäß dem Oberbegriff des Anspruchs 1 wie beispielsweise beschrieben im US-Patent US 5,059,103 wird ein Messerkopf für Messer eines Unterwassergranulators durch eine Druckfeder gegen die Lochplatte angedrückt, um einen Verschleiß der Messer auszugleichen und einen ständigen Kontakt der Messer mit der Lochplatte sicherzustellen, damit ein sauberes Abtrennen der Granulatkörner erfolgen kann. Dabei ist bei dieser bekannten Messerkopfhalterung die Andruckkraft der Druckfeder auf die im Betrieb benötigte hohe Andruckkraft eingestellt, was den Verschleiß der Messer und der Lochplatte noch verstärkt.

Das Patent DE 196 47 396 C2 beschreibt eine Messerkopfhalterung für mit einer Lochplatte oder Düsenmündung zusammenwirkende Messer eines Unterwassergranulators mit einem mit einer angetriebenen Welle verbundenen, in Richtung der Lochplatte oder der Düsenmündung federnd beaufschlagten Halteteil für die Messer, wobei das Halteteil während des Betriebs des Granulators gegenüber der Welle axial verschiebbar, nicht jedoch verdrehbar ist, wobei dort zusätzlich eine axiale Bohrung in der angetriebenen Welle einen darin verschiebbar aufgenommenen Kolben aufweist, welcher nur in Richtung zur Lochplatte hin einseitig mit einem durch eine Steuereinrichtung veränderbaren Druck beaufschlagbar ist, so dass das dortige Halteteil durch den Kolben mit veränderbarem Druck gegen die Lochplatte andrückbar ist. Dadurch kann dort auch keine Kompensation oder eine Verringerung des Anpressdrucks durch Gegendruck auf den dortigen Kolben weg von der Düsenplatte zur Kompensation von hydrodynamischen Kräften auf die schrägstehenden Messer in Richtung der Lochplatte erfolgen. Auch eine exakte Führung und Lagerung des dortigen Halteteils ist dabei erschwert bzw. gar nicht gegeben, da der Halteteil frei in die Prozesskammer des dortigen Unterwassergranulators hineinragt.

Generell besteht also im Stand der Technik die Problematik einer einerseits erforderlichen Anpassbarkeit an die Verschleißzustände des Messers einer Messeranordnung eines Unterwassergranulators, wobei übermäßiges Andrücken der Messer an die Lochplatte des Unterwassergranulators möglichst aber vermieden werden soll. Andererseits soll die sich drehende Messeranordnung in der Prozesskammer des Gehäuses eines Unterwassergranulators möglichst stabil geführt sein, um ein gleichmäßiges Abtrennen der Granulatkörner unter allen Betriebszuständen zu gewährleisten und auch einen ungleichmäßigen Verschleiß durch ungleichmäßigen Lauf der Messeranordnung möglichst zu vermeiden.

Es ist also die Aufgabe der vorliegenden Erfindung, eine Messerkopfhalterung für Messer eines Unterwassergranulators vorzusehen, welche die Nachteile des Standes der Technik überwindet, und insbesondere eine Messerkopfhalterung vorzusehen, welche auf konstruktiv einfache Art und Weise eine hohe Stabilität und Gleichmäßigkeit der Messerbewegung beim Granuliervorgang ermöglicht sowie insbesondere ein Verkanten oder Flattern der Messer gegenüber der Lochplatte eines Unterwassergranulators bei gleichzeitig möglicher Vermeidung von erhöhtem Anpressdruck der Messer an die Lochplatte gewährleistet und dennoch eine einfache Nachstellbarkeit bei Verschleiß der Messer erlaubt.

Die Aufgabe wird gelöst durch eine erfindungsgemäße Messerkopfhalterung mit den Merkmalen gemäß Anspruch 1. Bevorzugte Ausführungsformen sind in den abhängigen Ansprüchen definiert.

Die erfindungsgemäße Messerkopfhalterung dient zum Halten und Antreiben von einem Messer oder mehreren Messern eines Unterwassergranulators zum Granulieren von Granulatkörnern, z. B. aus einer Kunststoffschmelze, austretend aus einer Lochplatte in eine Prozesskammer in einem Gehäuse dieses Unterwassergranulators, wobei die Messerkopfhalterung eine Messerwelle aufweist, welche an eine Motorwelle eines Motors des Unterwassergranulators ankoppelbar und auch wieder abtrennbar ist. Erfindungsgemäß weist die Messerwelle der Messerkopfhalterung einen inneren Messerwellenteil und einen äußeren Messerwellenteil auf. Der äußere Messerwellenteil umgibt den inneren Messerwellenteil. Der äußere Messerwellenteil kann den inneren Messerwellenteil dabei insbesondere zumindest abschnittsweise umgeben und gegebenenfalls beispielsweise im hinteren, von der Lochplatte abgewandten Teil davon über den inneren Messerwellenteil hinausragen, und auch der innere Messerwellenteil kann mit einem vorderen Teilabschnitt, an welchem ein Messerhalter bzw. die Messer angebracht sein können, noch etwas aus dem äußeren Messerwellenteil herausragen. Im Wesentlichen umgibt also der äußere Messerwellenteil über die wesentliche Länge der so gebildeten Messerwelle den inneren Messerwellenteil, also bevorzugt zu etwa 70 % oder gar 90 % bis annähernd 100 % davon. Der innere Messerwellenteil und der äußere Messerwellenteil sind gegeneinander axial verschiebbar, aber nicht gegeneinander verdrehbar. Dabei ist der äußere Messerwellenteil gegen den inneren Messerwellenteil in einem vorderen Bereich, welcher der Lochplatte des Unterwassergranulators zugewandt ist, über eine vordere Abstützung axial verschiebbar gelagert, wobei bevorzugt der innere Messerwellenteil gegen den äußeren Messerwellenteil z. B. zum Ausgleich von Verschleiß an dem einen Messer oder den Messern in Richtung der Lochplatte verschiebbar sein kann, und der äußere Messerwellenteil ist gegen das Gehäuse des Unterwassergranulators über zumindest eine dazwischen angeordnete Drehlagerung drehbar gelagert. Somit kann dann auch das innere Messerwellenteil, welches ja erfindungsgemäß gegen das äußere Messerwellenteil nicht verdrehbar ist, ebenfalls relativ zum Gehäuse des Unterwassergranulators und somit auch zur Lochplatte und den dortigen Düsenöffnungen mit dem an dem inneren Messerwellenteil angebrachten Messer bzw. Messern eine entsprechende Drehbewegung ausführen. Das äußere Messerwellenteil soll dabei zweckmäßig nicht relativ zur Lochplatte bzw. zum Gehäuse des Unterwassergranulators und/oder zum Gehäuse des Motors verschiebbar sein. Zweckmäßig sind der innere Messerwellenteil und der äußere Messerwellenteil koaxial zueinander und mit einem umfänglichen Raum dazwischen, angeordnet.

Die erfindungsgemäße Gestaltung der Messerkopfhalterung mit einer Messerwelle mit innerem Messerwellenteil und äußerem Messerwellenteil, welche gegeneinander verschiebbar sind, erlaubt auf konstruktiv recht einfache Art und Weise eine einfache Nachstellbarkeit bei auftretende Verschleiß des Messers/der Messer des Unterwassergranulators, ohne dabei einen überhöhten dauerhaften Anpressdruck, welcher verschleißerhöhend im Bereich der Lochplatte und der Messer wirken würde, vorsehen zu müssen. Dabei wird durch die Ineinander-Anordnung von innerem Messerwellenteil und äußerem Messerwellenteil mit Abstützung im vorderen Bereich zur Lochplatte hin eine zusätzliche Stabilisierung der in die Prozesskammer ragenden Messerwelle erfindungsgemäß so ermöglicht. Dies erhöht die Stabilität des Granuliervorgangs deutlich, da kein Flattern oder Verkanten der Messerwelle und somit der Messer gegenüber der Lochplatte auftritt. Außerdem können durch die funktionale Trennung der Funktion der axialen Verschiebbarkeit und der Rotation so jeweils auf einfache Art und Weise eine entsprechende Axiallagerung und/oder - führung und eine entsprechende Drehlagerung und/oder -führung getrennt voneinander auf konstruktiv jeweils spezifische und einfache Art erfindungsgemäß verwirklicht sein. Dabei ist die Axiallagerung und/oder -führung im Bereich zur Lochplatte hin angeordnet und die Drehlagerung und/oder -führung kann bevorzugt mittig im Gehäuse des Unterwassergranulators bzw. sogar eher im hinteren, von der Lochplatte abgewandten Bereich der Messerwelle eines solchen Messerkopfhalterung ausgestatteten Unterwassergranulators angeordnet sein.

Eine besonders stabilisierende Gestaltung der beiden koaxialen inneren und äußeren Messerwellenteile kann bevorzugt erreicht werden, wenn die vordere Abstützung im vorderen Bereich der Messerwelle des Unterwassergranulators zur Lochplatte hin so ausgebildet ist, dass diese Abstützung in einem Bereich von bis zu 30 % der Länge des inneren Messerwellenteils dort vorgesehen ist. Die Abstützung erfolgt also immer zumindest im vorderen Bereich von dort bis zu 30 % der Länge des inneren Messerwellenteils, selbst wenn bereits ein deutlicher Verschleiß und somit ein axiales Nachschieben des inneren Messerwellenteils in Richtung der Lochplatte gegenüber dem äußeren Messerwellenteil bzw. gegenüber dem Gehäuse des Unterwassergranulators erfolgt ist.

Eine vorteilhafte Gestaltung dieser vorderen Abstützung kann beispielsweise als ringförmige Verdickung des inneren Messerwellenteils dort ausgebildet sein. Diese ringförmige Verdickung kann außen an dem inneren Messerwellenteil vorgesehen sein und sich an einen entsprechenden inneren Abschnitt des äußeren Messerwellenteils abstützen. Die Verdickung kann aber auch entsprechend an dem äußeren Messerwellenteil innen vorgesehen sein und sich an dem inneren Messerwellenteil abstützen.

Gegebenenfalls kann die vordere Abstützung auch in Form von Nuten und Federn ausgebildet sein, welche im bzw. am inneren Messerwellenteil oder in bzw. am äußeren Messerwellenteil jeweils komplementär vorgesehen sein können, wobei dann diese axiale Führung des inneren Messerwellenteils gegenüber dem äußeren Messerwellenteil gleichzeitig die Verhinderung der Verdrehbarkeit der beiden Messerwellenteile gegeneinander funktional mit beinhaltet (nicht jedoch die Übertragung/den Antrieb der Bewegung für die axiale Verschiebbarkeit). Generell kann auch eine geeignete sonstige Konstruktion die Vermeidung der Verdrehbarkeit und die axiale Führung von innerem Messerwellenteil und äußerem Messerwellenteil gegeneinander gewährleisten, wie auch weiter unten noch beschrieben werden wird.

Besonders bevorzugt ist eine Ausführungsform der vorderen Abstützung der Erfindung, bei welcher diese vordere Abstützung als Gleitlager ausgebildet ist. Somit können dort aufwendige andere Lagerkonstruktionen in diesem vorderen Bereich der so gestalteten Messerwelle der erfindungsgemäßen Messerkopfhalterung konstruktiv einfach vermieden werden.

Da im Betrieb die Prozesskammer des Unterwassergranulators mit der sich darin befindenden Messerwelle der erfindungsgemäßen Messerkopfhalterung mit einem Prozessfluid, z. B. Wasser, durchströmt wird, ist es besonders zweckmäßig, dass der äußere Messerwellenteil gegen den inneren Messerwellenteil im Bereich der vorderen Abstützung über eine Axialdichtung axial verschiebbar abgedichtet ist, so dass kein Prozessfluid in den Raum zwischen dem inneren Messerwellenteil und dem äußeren Messerwellenteil eindringen kann.

Ferner ist es zweckmäßig, dass der äußere Messerwellenteil gegen das Gehäuse des Unterwassergranulators bzw. entsprechend gegenüber der in dem Gehäuse ausgebildeten Prozesskammer des Unterwassergranulators über zumindest eine Drehdichtung drehbar abgedichtet ist, damit dort kein Prozessfluid durchdringen kann und das Gehäuse gegen das Prozessfluid abgedichtet bleibt.

Besonders zweckmäßig können also erfindungsgemäß bevorzugt individuell auf die Verschiebbarkeit und die Verdrehbarkeit jeweils individuell abgestimmte Dichtungen zum Einsatz kommen.

Gemäß einer bevorzugten Ausführungsform der erfindungsgemäßen Messerkopfhalterung kann ein Mitnehmerelement vorgesehen sein, welches den äußeren Messerwellenteil und den inneren Messerwellenteil so verbindet, dass mittels des Mitnehmerelements eine Rotationsbewegung zwischen dem äußeren Messerwellenteil und dem inneren Messerwellenteil übertragbar ist, wobei bevorzugt durch das Mitnehmerelement auch die axiale Führung von innerem Messerwellenteil und äußerem Messerwellenteil gegeneinander gegeben sein kann. Das Mitnehmerelement kann besonders bevorzugt in einem hinteren Bereich, d. h. weiter weg von der Lochplatte des Unterwassergranulators als die vordere Abstützung an der Messerwelle vorgesehen sein. Ein solches Mitnehmerelement erlaubt die optimale Übertragung der nötigen Drehbewegung auf die Messer, wobei im Betrieb einer Granuliervorrichtung durchaus Drehmomente in erheblicher Höhe übertragen werden müssen. Dies kann durch ein solches zusätzliches Mitnehmerelement mit entsprechender Dimensionierung besonders einfach realisiert werden.

Um beim Auftreten von Verschleiß des Messers bzw. der Messer an der Messerkopfhalterung eine axiale Nachstellbarkeit der Messer gegenüber der Lochplatte des Unterwassergranulators zu ermöglichen, ist gemäß einer bevorzugten Ausführungsform der erfindungsgemäßen Messerkopfhalterung eine axiale Verstelleinrichtung vorgesehen, welche bevorzugt über das Mitnehmerelement mit der Messerwelle, bevorzugt im inneren Messerwellenteil, verbunden ist. Somit kann die Messerwelle bzw. der innere Messerwellenteil bei auftretendem Verschleiß axial verschoben und neu eingestellt werden, wobei bevorzugt der äußere Messerwellenteil axial ortsfest in seiner Drehlagerung verbleiben kann.

Die axiale Verstelleinrichtung kann bevorzugt eine Gewindemuffe aufweisen, welche über ein Feingewinde gegen das Gehäuse des Unterwassergranulators oder das Gehäuse des Motors so verdrehbar ist, dass dadurch über das mit der Gewindemuffe verbundene Mitnehmerelement eine entsprechende axiale Verschiebung der Messerwelle, bevorzugt des inneren Messerwellenteils, erfolgt. Somit ist auf einfache Weise über die von Hand verstellbare Gewindemuffe eine manuelle Nachstellbarkeit und Positionierung z.B. bei auftretendem Messerverschleiß bevorzugt vorgesehen.

Die axiale Verstelleinrichtung kann auch durch einen Betätigungsfluidabschnitt, z.B. ausgebildet als ein Pneumatikabschnitt oder ein Hydraulikabschnitt, gebildet sein, welcher mit zumindest einem Hohlraum zum Gehäuse des Unterwassergranulators und/oder dem Gehäuse des Motors vorgesehen ist, wobei der dort entsprechend ausbildete veränderbare Hohlraum mit einer Betätigungsfluidquelle, z.B. einer Druckluftquelle oder einer Hydraulikfluiddruckquelle, verbunden ist, so dass durch entsprechende Druckbeaufschlagung in den Hohlraum durch die Übertragung über das in Verbindung stehende Mitnehmerelement eine entsprechende axiale Verschiebung des inneren Messerwellenteils gegenüber dem äußeren Messerwellenteil erfolgen kann. Dies gestattet erfindungsgemäß bevorzugt eine weitgehend automatisierte Nachstellung der Messerposition bei auftretendem Messerverschleiß sowie eine einfache Einstellbarkeit des Anpressdrucks der Messer an die Lochplatte.

Bevorzugt kann der Betätigungsfluidabschnitt einen doppelt wirkenden Zylinder aufweisen, mit einem ersten Hohlraum von der Lochplatte abgewandt und einem zweiten Hohlraum, der Lochplatte zugewandt und mit einem dazwischen angeordneten Kolben bzw. Kolbenelement sowie einer entsprechenden Betätigungsfluidsteuerung, so dass über den Kolben/das Kolbenelement sowohl eine axiale Bewegung und/oder Kraftbeaufschlagung in Richtung der Lochplatte als auch in Richtung von der Lochplatte weg ermöglicht ist, wobei damit eine besonders flexible Einstellbarkeit des Anpressdrucks der damit in Verbindung stehenden Messer an die Lochplatte möglich ist und sogar eine Kompensation oder eine Verringerung des Anpressdrucks durch Gegendruck auf den Kolben weg von der Düsenplatte zur Kompensation von hydrodynamischen Kräften auf die schrägstehenden Messer in Richtung der Lochplatte erfolgen kann.

Nach einer erfinderischen Weiterbildung ist vorgesehen, dass das Mitnehmerelement zumindest ein Mitnehmerstift ist, welcher an zumindest einem Abschnitt, z.B. einem Endabschnitt davon direkt oder indirekt mit dem äußeren Messerwellenteil verbunden ist und an zumindest einem weiteren Abschnitt davon mit dem inneren Messerwellenteil verbunden ist. Somit kann auch die drehfeste Anordnung und/oder die axiale Führung zwischen innerem Messerwellenteil und äußerem Messerwellenteil zuverlässig verwirklicht sein. Es kann bei einer axialen Verschiebung des inneren Messerwellenteils gegenüber dem äußeren Messerwellenteil auch diese Verschiebung auf das innere Messerwellenteil entsprechend übertragen werden. Es kann einer oder es können mehrere Mitnehmerstifte, z.B. zwei gegenüberliegende Mitnehmerstifte vorgesehen sein.

Gemäß einer weiteren bevorzugten erfindungsgemäßen Weiterbildung kann der äußere Messerwellenteil mit der Motorwelle drehfest koppelbar sein, bevorzugt über eine Passfeder, welche besonders bevorzugt zwischen der Motorwelle und einem hinteren Abschnitt (gesehen bezüglich der Lage zur Lochplatte) des äußeren Messerwellenteils angeordnet sein kann. Somit kann besonders flexibel beispielsweise der Motor von der Granuliervorrichtung mit der so gestalteten Messerkopfhalterung entfernt werden, beispielsweise zu Wartungszwecken.

Zu Wartungszwecken ist auch das Messer bzw. sind auch die Messer mittels eines Messerhalters an dem inneren Messerwellenteil der erfindungsgemäßen Messerkopfhalterung angebracht. Dies gestattet die einfache Austauschbarkeit bei Erreichen der Verschleißgrenze des Messers bzw. der Messer.

Besonders flexibel wird ein Unterwassergranulator mit der erfindungsgemäßen Messerkopfhalterung gemäß einer weiteren bevorzugten Ausführungsform der Erfindung auch dadurch, dass die Vorrichtung als Ganzes über eine Aufhängung an einer Laufschiene einhängbar und axial verschiebbar ist, wobei die Aufhängung an dem Gehäuse des Motors und/oder an dem Gehäuse des Unterwassergranulators selbst vorgesehen sein kann.

Zweckmäßigerweise kann das Gehäuse des Unterwassergranulators einen Prozesskammergehäuseabschnitt und einen daran über einen Flanschabschnitt anbringbaren Lagergehäuseabschnitt aufweisen, an welchen das Gehäuse des Motors anbringbar, bevorzugt anschraubbar ist. Der Prozesskammergehäuseabschnitt und/oder der Flanschabschnitt und/oder der Lagergehäuseabschnitt können auch einteilig ausgebildet sein. Die Drehlager und/oder die Drehdichtung des äußeren Messerwellenteils gegenüber dem Gehäuse des Unterwassergranulators kann dabei bevorzugt im Bereich des Flanschabschnitts oder im Bereich des Lagergehäuseabschnitts des so gestalteten Gehäuses des Unterwassergranulators vorgesehen sein. Dies gestattet einen weitgehend modularen Aufbau, bei welchem auch entsprechende Einzelabschnitte, z. B. bei nötigem Austausch von Drehlagem oder Drehdichtungen, einzeln austauschbar bzw. instand setzbar sein können.

Die Erfindung wird im Folgenden anhand der beigefügten Figuren näher beispielhaft erläutert werden. Es zeigen:
- Fig. 1: eine schematische Schrittansicht eines Unterwassergranulators mit einer manuell verstellbaren Messerkopfhalterung gemäß einer ersten bevorzugten Ausführungsform der Erfindung in Ruhestellung;
- Fig. 2: eine schematische Schrittansicht eines Unterwassergranulators mit einer mittels Betätigungsfluid verstellbaren Messerkopfhalterung gemäß einer zweiten bevorzugten Ausführungsform der Erfindung in Ruhestellung;
- Fig. 3: eine schematische Schrittansicht der Vorrichtung der Figur 1 in Arbeitsstellung bei aufgetretenem Verschleiß; und
- Fig. 4: eine schematische Schrittansicht der Vorrichtung der Figur 2 in Arbeitsstellung bei aufgetretenem Verschleiß.

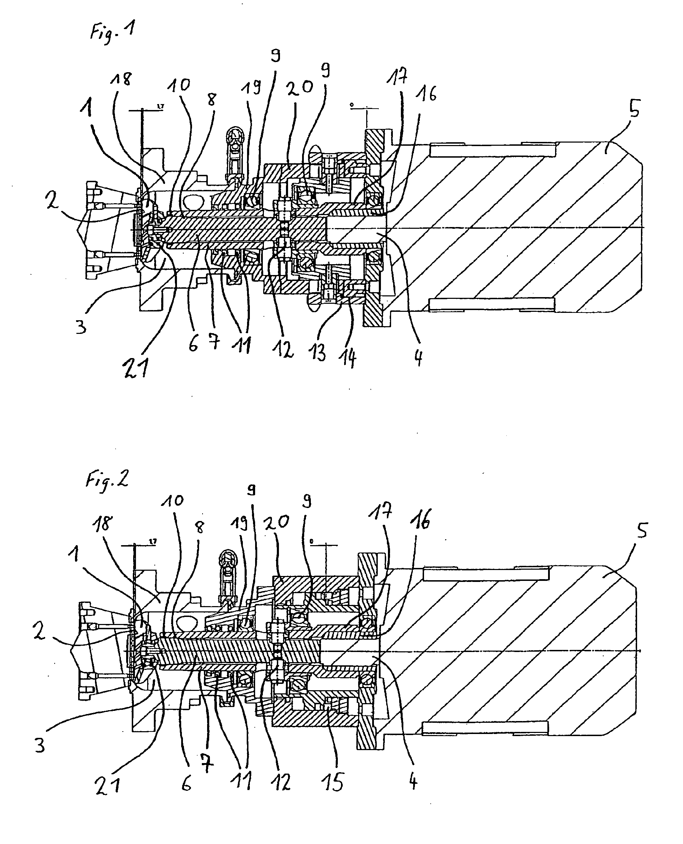

Die Fig. 1 zeigt eine schematische Schnittansicht eines Unterwassergranulators mit einer manuell verstellbaren Messerkopfhalterung gemäß einer ersten bevorzugten Ausführungsform der Erfindung in Ruhestellung.

Der in Fig. 1 gezeigte Unterwassergranulator dient zum Granulieren von Granulatkömem, z. B. aus einer Kunststoffschmelze, welche aus einer Lochplatte 2 aus den dortigen Düsenöffnungen in eine Prozesskammer 3 im Gehäuse des Unterwassergranulators austritt. Das Gehäuse des Unterwassergranulators weist einen Prozesskammergehäuseabschnitt 18, mit darin vorgesehener Prozesskammer 3, einen daran anschließenden Flanschabschnitt 19 sowie einen wiederum an dem Flanschabschnitt 19 anbringbaren Lagergehäuseabschnitt 20 auf, wobei der Flanschabschnitt 19 und der Lagergehäuseabschnitt 20 auch einteilig ausgebildet sein können. Daran anschließend ist ein Gehäuse eines Motors 5 lösbar angebracht. Die Prozesskammer 3 des Unterwassergranulators wird im Betrieb von einem Prozessfluid, z. B. Wasser, durchströmt, welches die im Bereich der Lochplatte 2 abgetrennten Granulatkörner mit sich aus dem Bereich der Prozesskammer 3 abführt. Die erfindungsgemäße Messerkopfhalterung trägt die Messer 1, angebracht an einer Messerwelle. Erfindungsgemäß weist die Messerwelle einen inneren Messerwellenteil 6 und einen äußeren Messerwellenteil 7 auf. Die Messer 1 sind mittels eines Messerhalters 21 austauschbar an dem inneren Messerwellenteil 6 angebracht, nämlich, wie in Fig. 1 gezeigt, durch Verschraubung des Messerhalters 21 im Stirnbereich des inneren Messerwellenteils 6 im Bereich, welcher der Lochplatte 2 des Unterwassergranulators zugewandt ist. Wie in Fig. 1 gezeigt, weisen die Messer 1 in Ruhestellung z.B. einen Abstand von 1,7 mm zur Lochplatte 2 auf. Die Fig. 1 zeigt dabei den Neuzustand der Messer 1 ohne aufgetretenen Verschleiß.

Das innere Messerwellenteil 6 der erfindungsgemäßen Messerkopfhalterung ist gegen das äußere Messerwellenteil 7 axial verschiebbar, aber nicht gegen das äußere Messerwellenteil 7 verdrehbar. Das innere Messerwellenteil 6 und das äußere Messerwellenteil 7 sind koaxial angeordnet und gegenüber dem Gehäuse (mit seinen Teilen 18, 19, 20) des Unterwassergranulators drehbar. Im vorderen Bereich, also in dem Bereich, welcher der Lochplatte 2 des Unterwassergranulators zugewandt ist, ist eine vordere Abstützung 8 vorgesehen, über welche der innere Messerwellenteil 6 gegen den äußeren Messerwellenteil 7 axial verschiebbar ist. Der äußere Messerwellenteil 7 mit dem darin angeordneten inneren Messerwellenteil 6 ist gegen das Gehäuse des Unterwassergranulators über zumindest eine dazwischen angeordnete Drehlagerung 9 drehbar gelagert. Im Fall der Darstellung der Fig. 1 sind zwei dieser Drehlagerungen 9, ausgeführt als Kugellager, vorgesehen, einmal im Bereich des Flanschabschnitts 19 und einmal im Bereich des Lagergehäuseabschnitts 20 des Gehäuses 3 des gezeigten Unterwassergranulators. Somit sind die Axiallagerung und die Drehlagerung voneinander getrennt ausgeführt. Die axiale Lagerung ist im vorderen Bereich zum Messerhalter 21 sowie zur Lochplatte 2 hin zwischen dem inneren Messerwellenteil 6 und dem äußeren Messerwellenteil 7 angeordnet, und die Drehlagerung 9 ist im hinteren, also der Lochplatte 2 eher abgewandten Bereich zwischen dem äußeren Messerwellenteil 8 und dem Gehäuse des Unterwassergranulators dort angeordnet. Die axiale Abdichtung zwischen dem inneren Messerwellenteil 6 und dem äußeren Messerwellenteil 7 erfolgt durch eine Axialdichtung 10 im Bereich der vorderen Abstützung 8, welche, wie in Fig. 1 gezeigt, bevorzugt als Gleitlager ausgebildet sein kann. Die Abdichtung des äußeren Messerwellenteils 7 gegenüber dem Gehäuse des Unterwassergranulators erfolgt über zumindest eine Drehdichtung 11, wobei in der in Fig. 1 gezeigten Ausführungsform zwei solcher Drehdichtungen 11, ausgeführt bevorzugt als O-Ring-Dichtungen, zwischen dem äußeren Messerwellenteil 7 und dem Flanschabschnitt 19 des Gehäuses des Unterwassergranulators vorgesehen sind. Die Lage der jeweiligen Axial- und Drehdichtungen 10, 11 kann bevorzugt, wie in Fig. 1 gezeigt, jeweils im Bereich der jeweiligen Abstützungen bzw. Lagerungen mit vorgesehen sein.

Die Messerwelle ist an eine Motorwelle 4 des Motors 5 des Unterwassergranulators ankoppelbar, wobei der äußere Messerwellenteil 7 in seinem hinteren, von der Lochplatte 2 abgewandten Bereich davon über eine zwischengeordnete Passfeder 16 mit seinem hinteren Abschnitt 17 auf der Motorwelle 4 drehfest koppelbar ist. Über ein Mitnehmerelement 12, ausgeführt als zumindest ein Mitnehmerstift (in der in Fig. 1 gezeigten Ausführungsform zwei gegenüberliegende Mitnehmerstifte), ist der äußere Messerwellenteil 7 mit dem inneren Messerwellenteil 6 so verbunden, dass dadurch die Rotationsbewegung des äußeren Messerwellenteils 7 auf das innere Messerwellenteil 6 übertragbar ist und die axiale Führung zwischen äußerem Messerwellenteil 7 und innerem Messerwellenteil 6 gegeben ist. Dabei ist zumindest ein Endabschnitt des Mitnehmerstifts indirekt mit dem äußeren Messerwellenteil 7 verbunden, und ein weiterer Abschnitt, im gezeigten Fall ein Mittelabschnitt, des Mitnehmerstifts ist mit dem inneren Messerwellenteil 6 verbunden.

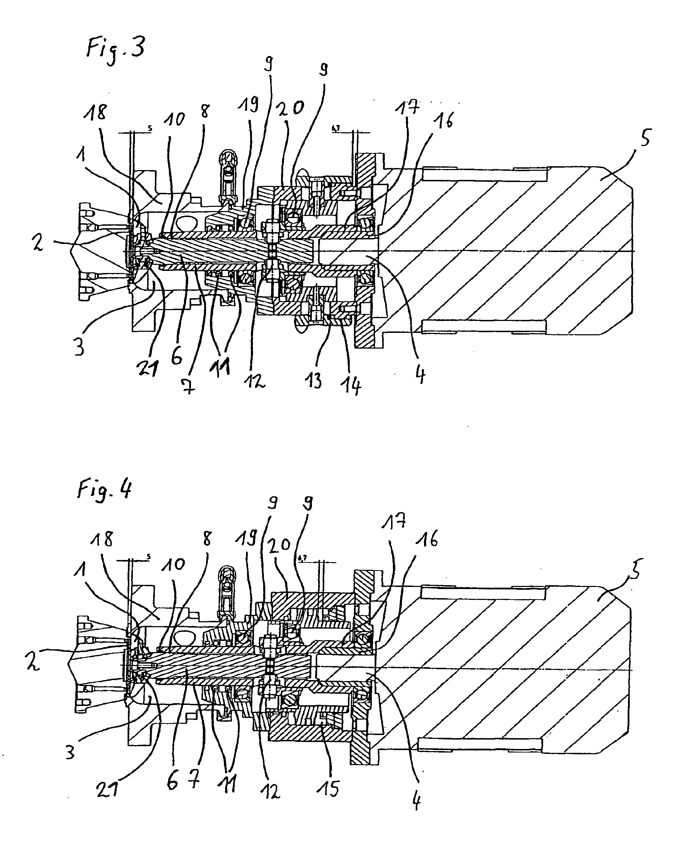

Eine axiale Verstelleinrichtung ist vorgesehen, mittels welcher bei auftretendem Verschleiß an den Messern 1 eine axiale Nachstellung des inneren Messerwellenteils in Richtung der Lochplatte 2 vorgenommen werden kann. Bei der in Fig. 1 gezeigten ersten bevorzugten Ausführungsform einer manuell verstellbaren Messerkopfhalterung weist die axiale Verstelleinrichtung eine Gewindemuffe 13 auf, welche über ein Feingewinde 14 gegen das Gehäuse des Unterwassergranulators so verdrehbar ist, dass dadurch über das mit der Gewindemuffe 13 verbundene Mitnehmerelement 12, d. h. die zwei gegenüberliegenden Mitnehmerstifte, eine entsprechende axiale Verschiebung des inneren Messerwellenteils 6 gegenüber dem Gehäuse des Unterwassergranulators und auch gegenüber dem äußeren Messerwellenteil 7 erfolgt. Dabei werden auch die zwei gegenüberliegenden Mitnehmerstifte des Mitnehmerelements 12 über die indirekte Verbindung mit dem äußeren Messerwellenteil 7 gegenüber diesem äußeren Messerwellenteil 7 entsprechend axial verschoben. Dies wird aus der noch folgenden Fig. 3 noch deutlicher erkennbar.

Die vordere Abstützung 8 ist in einem vorderen Bereich von etwa 30 % der Länge des inneren Messerwellenteils 6 ausgebildet. Im in Fig. 1 dargestellten Fall ist die vordere Abstützung 8 im Bereich der vorderen 5 bis 20 % des inneren Messerwellenteils 6 vorgesehen.

In den weiteren Figuren beschreiben gleiche Bezugszeichen die gleichen Elemente der erfindungsgemäßen Vorrichtung, wobei die entsprechend oben gegebenen Erläuterungen auch dort gelten.

Die Fig. 2 zeigt eine schematische Schnittansicht eines Unterwassergranulators mit einer mittels Betätigungsfluid verstellbaren Messerkopfhalterung gemäß einer zweiten bevorzugten Ausführungsform der Erfindung ebenfalls in Ruhestellung.

Die Vorrichtung gemäß Fig. 2 unterscheidet sich von der Vorrichtung gemäß Fig. 1 lediglich dadurch, dass die axiale Verstellbarkeit des inneren Messerwellenteils 6 gegenüber dem äußeren Messerwellenteil 7 bzw. gegenüber dem Gehäuse des Unterwassergranulators im Fall der Fig. 2 über eine axiale Verstelleinrichtung erfolgt, welche einen Betätigungsfluidabschnitt 15 aufweist, welcher beispielsweise wie im gezeigten Beispiel mit Druckluft betrieben als ein Pneumatikabschnitt ausgebildet sein kann oder mit Hydraulikfluid betrieben als ein Hydraulikabschnitt ausgebildet sein kann. Dabei ist ein entsprechender veränderbarer Hohlraum dort zum Gehäuse hin vorgesehen, welcher mit einer Betätigungsfluidquelle verbunden ist (im Beispiel eine Druckluftquelle, welche allerdings nicht gezeigt ist), so dass bei Druckaufbau im Bereich des Hohlraums des Betätigungsfluidabschnitts 15 sich dieser vergrößert und dadurch die verbundenen zwei gegenüberliegenden Mitnehmerstifte des Mitnehmerelements 12 die entsprechende Bewegung des verschiebbaren Teils des Betätigungsfluidabschnitts 15 auf den inneren Messerwellenteil 6 übertragen und somit eine entsprechende axiale Verschiebung des inneren Messerwellenteils 6 gegenüber dem Gehäuse des Unterwassergranulators bzw. gegenüber dem äußeren Messerwellenteil 7 erfolgt. Der Betätigungsfluidabschnitt 15 mit dem veränderbaren Hohlraum ist als ein doppelt wirkender Zylinder ausgebildet, mit einem ersten Hohlraum von der Lochplatte abgewandt und einem zweiten Hohlraum, der Lochplatte zugewandt und mit einem dazwischen angeordneten Zwischenelement, mit der Funktionalität eines Kolbens sowie einer entsprechenden Betätigungsfluidsteuerung (nicht gezeigt), so dass über das Zwischenelement sowohl die axiale Bewegung/Verschiebung und/oder Kraftbeaufschlagung in Richtung der Lochplatte als auch in Richtung von der Lochplatte weg ermöglicht ist.

Die Fig. 3 zeigt eine schematische Schnittansicht der Vorrichtung der Fig. 1 in Arbeitsstellung bei aufgetretenem Verschleiß. Dabei ist zu sehen, dass beispielsweise nach einer Verdrehung der manuellen axialen Verstelleinrichtung über die Gewindemuffe 13 um gesamt 6,7 mm Verstellweg gegenüber dem Gehäuse des Unterwassergranulators bzw. gegenüber dem äußeren Messerwellenteil 7 ein Anführen der Messer 1 um 1,7 mm aus der Ruherstellung an die Lochplatte 2 erfolgt ist und zusätzlich ein Ausgleich des Verschleiß von 5 mm der Messer 1 durch entsprechende zusätzliche Verschiebung des inneren Messerwellenteils 6 um diese 5 mm erfolgt ist (1,7 mm Weg aus der Ruhestellung + 5 mm Verschleiß = 6,7 mm Verstellweg gesamt).

Die Fig. 4 zeigt eine schematische Schnittansicht der Vorrichtung der Fig. 2 in Arbeitsstellung bei aufgetretenem Verschleiß entsprechend der Darstellung der Fig. 3. Im Fall der Darstellung der Fig. 4 ist die axiale Verstellung über Druckaufbau im Bereich des veränderbaren Hohlraums des Betätigungsfluidabschnitts 15 und entsprechende Übertragung auf den inneren Messerwellenteil 6 erfolgt.

Die erfindungsgemäße Vorrichtung kann als Ganzes über eine Aufhängung an einer Laufschiene einhängbar und axial verschiebbar sein, wobei die Aufhängung an dem Gehäuse des Motors und/oder am Gehäuse des Unterwassergranulators vorgesehen sein kann. Besonders bevorzugt kann die Aufhängung im Bereich des Flanschabschnitts 19 des Gehäuses des Unterwassergranulators vorgesehen sein (die Aufhängung ist in den Figuren nicht gezeigt).

## Patentansprüche

1. Messerkopfhalterung für Messer (1) eines Unterwassergranulators zum Granulieren von Granulatkömem aus einer Kunststoffschmelze, welche aus einer Lochplatte (2) in eine Prozesskammer (3) im Gehäuse des Unterwassergranulators austritt, aufweisend eine Messerwelle, welche an eine Motorwelle (4) eines Motors (5) des Unterwassergranulators ankoppelbar ist,
wobei
die Messerwelle einen inneren Messerwellenteil (6) und einen den inneren Messerwellenteil (6) zumindest abschnittsweise umgebenden äußeren Messerwellenteil (7) aufweist, wobei der innere Messerwellenteil (6) und der äußere Messerwellenteil (7) gegeneinander axial verschiebbar aber nicht gegeneinander verdrehbar sind und der äußere Messerwellenteil (7) gegen den inneren Messerwellenteil (6) in einem vorderen Bereich, welcher der Lochplatte (2) des Unterwassergranulators zugewandt ist, über eine vordere Abstützung (8) axial verschiebbar gelagert ist und der äußere Messerwellenteil (7) gegen das Gehäuse des Unterwassergranulators über zumindest eine dazwischen angeordnete Drehlagerung (9) drehbar gelagert ist, **dadurch gekennzeichnet, dass** die Messer (1) mittels eines Messerhalters (21) an dem inneren Messerwellenteil (6) angebracht sind.

2. Vorrichtung nach Anspruch 1, **dadurch gekennzeichnet, dass** die vordere Abstützung (8) im vorderen Bereich von bis zu 30 % der Länge des inneren Messerwellenteils (6) ausgebildet ist.

3. Vorrichtung nach Anspruch 1 oder 2, **dadurch gekennzeichnet, dass** die vordere Abstützung (8) als ringförmige Verdickung des inneren Messerwellenteils (6) ausgebildet ist.

4. Vorrichtung nach einem der Ansprüche 1 bis 3, **dadurch gekennzeichnet, dass** die vordere Abstützung (8) als Gleitlager ausgebildet ist.

5. Vorrichtung nach einem der Ansprüche 1 bis 4, **dadurch gekennzeichnet, dass** der äußere Messerwellenteil (7) gegen den inneren Messerwellenteil (6) im Bereich der vorderen Abstützung (8) über eine Axialdichtung (10) axial verschiebbar abgedichtet ist.

6. Vorrichtung nach einem der Ansprüche 1 bis 5, **dadurch gekennzeichnet, dass** der äußere Messerwellenteil (7) gegen das Gehäuse des Unterwassergranulators über zumindest eine Drehdichtung (11) drehbar abgedichtet ist.

7. Vorrichtung nach einem der Ansprüche 1 bis 6, **dadurch gekennzeichnet, dass** ein Mitnehmerelement (12) vorgesehen ist, welches den äußeren Messerwellenteil (7) und den inneren Messerwellenteil (6) so verbindet, das mittels des Mitnehmerelements (12) eine Rotationsbewegung zwischen dem äußeren Messerwellenteil (7) und dem inneren Messerwellenteil (6) übertragbar ist.

8. Vorrichtung nach einem der Ansprüche 1 bis 7, **dadurch gekennzeichnet, dass** eine axiale Verstelleinrichtung vorgesehen ist, welche bevorzugt über das Mitnehmerelement (12) mit der Messerwelle, bevorzugt dem inneren Messerwellenteil (6), verbunden ist.

9. Vorrichtung nach Anspruch 8, **dadurch gekennzeichnet, dass** die axiale Verstelleinrichtung eine Gewindemuffe (13) aufweist, welche über ein Feingewinde (14) gegen das Gehäuse des Unterwassergranulators oder das Gehäuse des Motors so verdrehbar ist, dass dadurch über das mit der Gewindemuffe (13) verbundenen Mitnehmerelement (12) eine entsprechende axiale Verschiebung des inneren Messerwellenteils (6) erfolgt.

10. Vorrichtung nach Anspruch 8, **dadurch gekennzeichnet, dass** die axiale Verstelleinrichtung einen Betätigungsfluidabschnitt (15) mit zumindest einem Hohlraum zum Gehäuse des Unterwassergranulators oder dem Gehäuse des Motors und mit einer Betätigungsfluidquelle verbunden, aufweist, so dass dadurch über das Mitnehmerelement (12) eine entsprechende axiale Verschiebung des inneren Messerwellenteils (6) erfolgt.

11. Vorrichtung nach Anspruch 10, **dadurch gekennzeichnet, dass** der Betätigungsfluidabschnitt (15) einen doppelt wirkenden Zylinder aufweist.

12. Vorrichtung nach einem der Ansprüche 7 bis 11, **dadurch gekennzeichnet, dass** das Mitnehmerelement (12) zumindest ein Mitnehmerstift (12) ist, welcher an zumindest einem Abschnitt davon mit dem äußeren Messerwellenteil (7) verbunden ist und an zumindest einem weiteren Abschnitt mit dem inneren Messerwellenteil (6) verbunden ist.

13. Vorrichtung nach einem der Ansprüche 1 bis 12, **dadurch gekennzeichnet, dass** der äußere Messerwellenteil (7) mit der Motorwelle (4) drehfest koppelbar ist, bevorzugt über eine Passfeder (16), welche besonders bevorzugt zwischen der Motorwelle (4) und einem hinteren Abschnitt (17) des äußeren Messerwellenteils (7) angeordnet ist.

14. Vorrichtung nach einem der Ansprüche 1 bis 13, **dadurch gekennzeichnet, dass** die Vorrichtung als Ganzes über eine Aufhängung an einer Laufschiene einhängbar und axial verschiebbar ist, wobei die Aufhängung an dem Gehäuse des Motors und/oder an dem Gehäuse des Unterwassergranulators vorgesehen sein kann.

15. Vorrichtung nach einem der Ansprüche 1 bis 14, **dadurch gekennzeichnet, dass** das Gehäuse des Unterwassergranulators einen Prozesskammergehäuseabschnitt (18) und einen daran über einen Flanschabschnitt (19) anbringbaren Lagergehäuseabschnitt (20) aufweist, an welchen das Gehäuse des Motors (5) anbringbar, bevorzugt verschraubbar ist.

## Claims

1. Cutter head holder for blades (1) of an underwater granulator for granulating granules from a plastic melt that emerges from a perforated plate (2) into a process chamber (3) in the housing of the underwater granulator, having a cutter shaft that can be coupled to a motor shaft (4) of a motor (5) of the underwater granulator,
wherein
the cutter shaft has an inner cutter shaft part (6), and has an outer cutter shaft part (7) that surrounds the inner cutter shaft part (6) at least in sections, wherein the inner cutter shaft part (6) and the outer cutter shaft part (7) are axially displaceable relative to one another but are not rotatable relative to one another, and the outer cutter shaft part (7) is supported by a front support (8) in a forward region that faces the perforated plate (2) of the underwater granulator so as to be axially displaceable relative to the inner cutter shaft part (6), and the outer cutter shaft part (7) is supported so as to be rotatable relative to the housing of the underwater granulator by means of at least one rotary bearing (9) located therebetween, **characterized in that** the blades (1) are mounted on the inner cutter shaft part (6) by means of a blade holder (21).

2. Device according to claim 1, **characterized in that** the front support (8) is implemented in the forward region consisting of up to 30% of the length of the inner cutter shaft part (6).

3. Device according to claim 1 or 2, **characterized in that** the front support (8) is implemented as an annular bulge on the inner cutter shaft part (6).

4. Device according to any one of claims 1 through 3, **characterized in that** the front support (8) is implemented as a plain bearing.

5. Device according to any one of claims 1 through 4, **characterized in that** the outer cutter shaft part (7) is sealed in an axially displaceable manner with respect to the inner cutter shaft part (6) in the region of the front support (8) by means of an axial seal (10).

6. Device according to any one of claims 1 through 5, **characterized in that** the outer cutter shaft part (7) is rotatably sealed with respect to the housing of the underwater granulator by means of at least one rotary seal (11).

7. Device according to any one of claims 1 through 6, **characterized in that** a driver element (12) is provided that connects the outer cutter shaft part (7) and the inner cutter shaft part (6) in such a manner that a rotational motion can be transmitted between the outer cutter shaft part (7) and the inner cutter shaft part (6) by means of the driver element (12).

8. Device according to any one of claims 1 through 7, **characterized in that** an axial adjusting device is provided that preferably is connected by the driver element (12) to the cutter shaft, preferably the inner cutter shaft part (6).

9. Device according to claim 8, **characterized in that** the axial adjusting device has a threaded sleeve (13), which is rotatable by means of a fine-pitch thread (14) relative to the housing of the underwater granulator or the housing of the motor in such a manner that a corresponding axial displacement of the inner cutter shaft part (6) consequently takes place by means of the driver element (12) connected to the threaded sleeve (13).

10. Device according to claim 8, **characterized in that** the axial adjusting device has an operating fluid section (15) with at least one cavity to the housing of the underwater granulator or the housing of the motor and connected to an operating fluid source, so that a suitable axial displacement of the inner cutter shaft part (6) takes place by means of the driver element (12) as a result.

11. Device according to claim 10, **characterized in that** the operating fluid section (15) has a double-acting cylinder.

12. Device according to any one of claims 7 through 11, **characterized in that** the driver element (12) is at least one drive pin (12), at least one section of which is connected to the outer cutter shaft part (7), and at least one additional section of which is connected to the inner cutter shaft part (6).

13. Device according to any one of claims 1 through 12, **characterized in that** the outer cutter shaft part (7) can be coupled to the motor shaft (4) in a rotationally fixed manner, preferably by means of a feather key (16), which in an especially preferred manner is located between the motor shaft (4) and a rear section (17) of the outer cutter shaft part (7).

14. Device according to any one of claims 1 through 13, **characterized in that** the device as a whole can be suspended from a slide rail, and can be axially movable, by means of a suspension, wherein the suspension can be provided on the housing of the motor and/or on the housing of the underwater granulator.

15. Device according to any one of claims 1 through 14, **characterized in that** the housing of the underwater granulator has a process chamber housing section (18), and has a bearing housing section (20) that can be attached thereto by means of a flange section (19) and to which the housing of the motor (5) can be attached, preferably can be screwed.

## Revendications

1. Fixation pour tête de lames pour lames (1) d'un granulateur immergé pour la granulation de granulés à partir d'une masse plastique fondue extrudés à travers une plaque perforée (2) dans une chambre de transformation (3) logée dans le bâti d'un granulateur immergé présentant un arbre porte-lames qui peut être couplé à l'arbre moteur (4) d'un moteur (5) du granulateur immergé, l'arbre porte-lames
présentant
une partie interne (6) et une partie externe (7) enveloppant au moins partiellement la partie interne (6), la partie interne (6) et la partie externe (7) de l'arbre porte-lames pouvant coulisser axialement, mais ne pouvant pas pivoter l'une par rapport à l'autre, la partie externe (7) de l'arbre porte-lames pouvant coulisser sur la partie interne (6) dans une zone antérieure située du côté de la plaque perforée (2) du granulateur immergé, grâce à un support antérieur (8) elle peut coulisser axialement, la partie externe (7) pouvant pivoter par rapport au bâti du granulateur immergé grâce à au moins un palier rotatif (9) monté entre eux, **caractérisée en ce que** les lames (1) sont fixées sur la partie interne (6) de l'arbre porte-lames au moyen d'un porte-lames (21).

2. Dispositif selon la revendication 1 **caractérisé en ce que** le support antérieur (8) dans la partie antérieure a une longueur allant jusqu'à 30% de la longueur de la partie interne (6) de l'arbre porte-lames.

3. Dispositif selon la revendication 1 ou 2 **caractérisé en ce que** le support antérieur (8) a la forme d'un bourrelet annulaire sur la partie interne (6) de l'arbre porte-lames.

4. Dispositif selon une des revendications 1 à 3 **caractérisé en ce que** le support antérieur (8) est un palier lisse.

5. Dispositif selon une des revendications 1 à 4 **caractérisé en ce que** la partie externe (7) de l'arbre porte-lames est étanche par rapport à la partie interne (6) de l'arbre porte-lames dans la zone du support antérieur (8) grâce à un joint axial (10) coulissant.

6. Dispositif selon une des revendications 1 à 5 **caractérisé en ce que** la partie extérieure (7) de l'arbre porte-lames est étanche par rapport au bâti du granulateur immergé grâce à au moins un joint rotatif (11).

7. Dispositif selon une des revendications 1 à 6 **caractérisé en ce qu'**un élément d'entraînement (12) est prévu reliant la partie interne (6) et la parie externe (7) de l'arbre porte-lames de telle façon qu'un mouvement de rotation peut être transmis entre la partie externe (7) et la partie interne (6) de l'arbre porte-lames grâce à l'élément d'entraînement (12).

8. Dispositif selon une des revendications 1 à 7 **caractérisé en ce qu'**un dispositif de réglage axial est prévu qui est relié avec l'arbre porte-lames, de préférence avec la partie interne (6) de l'arbre porte-lames, de préférence au moyen de l'élément d'entraînement (12).

9. Dispositif selon la revendication 8 **caractérisé en ce que** l'élément de réglage axial présente un manchon fileté (13) pouvant pivoter grâce à un filetage fin (14) sur le bâti du granulateur immergé ou le boîtier du moteur de sorte qu'en conséquence la partie interne (6) de l'arbre porte-lames coulisse axialement grâce à l'élément d'entraînement (12) solidaire du manchon fileté (13).

10. Dispositif selon la revendications 8 **caractérisé en ce que** le dispositif de réglage axial présente une section de fluide d'actionnement (15) avec au moins une cavité reliée au bâti du granulateur immergé ou au boîtier du moteur ou à une source de fluide d'actionnement de sorte qu'il en résulte un coulissement axial de la partie interne (6) de l'arbre porte-lame grâce à l'élément d'entraînement (12).

11. Dispositif selon la revendication 10 **caractérisé en ce que** la section contenant le fluide d'actionnement (15) présente un vérin à action double.

12. Dispositif selon une des revendications 7 à 11 **caractérisé en ce que** l'élément d'entraînement (12) est au moins une broche d'entraînement (12) qui est reliée à la partie externe (7) de l'arbre porte-lames au moins sur une portion et à la partie interne (6) de l'arbre porté-lames sur au moins une autre portion.

13. Dispositif selon une des revendications 1 à 12 **caractérisé en ce que** la partie externe (7) de l'arbre porte-lames peut être solidarisée en rotation avec l'arbre moteur (4), de préférence au moyen d'une clavette (16) agencée de manière très préférée entre l'arbre moteur (4) et une portion postérieure (17) de la partie externe (7) de l'arbre porte-lames.

14. Dispositif selon une des revendications 1 à 13 **caractérisé en ce que** l'ensemble du dispositif peut être accroché à un rail de roulement et peut coulisser axialement, la suspension pouvant être prévue sur le boîtier du moteur et/ou sur le bâti du granulateur immergé.

15. Dispositif selon une des revendications 1 à 14 **caractérisé en ce que** le bâti du granulateur immergé présente une portion chambre de transformation (18) et une portion logement de palier (20) pouvant y être juxtaposé au moyen d'une bride (19) et sur lequel le boîtier du moteur (5) peut être vissé de préférence.
